# EUROPEAN PATENT APPLICATION

(11) **EP 4 579 009 A1**
(43) Date of publication of application: **02.07.2025**
(21) Application number: 23857624.3
(22) Date of filing: 11.08.2023
(51) Int. Cl.: D01F 1/10, D01D 5/098, D02G 3/02, C09K 11/08, D06P 1/00, G01N 21/35, G01N 21/84

(54) **FIBERS FOR VERIFYING FABRIC AUTHENTICITY AND SYSTEM FOR VERIFYING FABRIC AUTHENTICITY BY USING SAME**

(30) Priority: 25.08.2022 KR 20220106714
(71) Applicant: HYOSUNG TNC CORPORATION, SEOUL, 04144 (KR)
(72) Inventor: KIM, Joong Yeol, Anyang-si Gyeonggi-do 14049 (KR); OH, Sung Jin, Anyang-si Gyeonggi-do 13907 (KR); KIM, Tae Sik, Anyang-si Gyeonggi-do 14077 (KR)
(74) Representative: Westphal, Mussgnug & Partner Patentanwälte mbB
(86) International application number: PCT/KR2023/011904
(87) International publication number: WO 2024/043590

(57) **Abstract**

The present invention relates to fibers for verifying fabric authenticity, which exhibit the functionality of verifying fabric authenticity by mixing a special pigment with fibers, and a system for verifying fabric authenticity by using the fibers. The fibers for verifying fabric authenticity of the present invention, which comprise an infrared light-emitting body, are included inside yarn or fabric to provide an effect of verifying authenticity or preventing forgery. For example, analysis for authenticity identification is complicated and impossible for certain functional products after fabric manufacture, but the fabric authenticity verification fibers of the present invention enable rapid and accurate authenticity identification.

## Description

### TECHNICAL FIELD

The present invention relates to fibers for verifying fabric authenticity and a system for verifying fabric authenticity by using the same, and more specifically, to fibers for verifying fabric authenticity, which exhibit the functionality of verifying fabric authenticity by mixing a special additive emitting infrared rays with fibers, and a system for verifying fabric authenticity by using the fibers.

### BACKGROUND ART

Security fibers are known to prevent the forgery of marketable securities, high value-added products, and the like, or verify the authenticity thereof. Through a method for making fibers comprise a special material, or dyeing or coating fibers with the special material, such security fibers emit light, change color, and emit fluorescent and phosphorescent light, or exhibit partial characteristics in response to the wavelength of an electromagnetic field or thermal conditions.

Korean Patent Laid-open Publication No. 2001-0112666 discloses a technology for providing anti-forgery and anti-tampering functionality by using a fluorescent synthetic resin including a fluorescent material that emits light when an external stimulus is present, a phosphorescent material that has a different emission wavelength from the fluorescent material and emits light after the external stimulus is removed, and a thermoplastic resin or thermosetting resin. However, the technology has a problem in that the anti-forgery performance is slightly insufficient.

U.S. Patent No. 4655788 discloses a method for manufacturing security fibers comprising a fluorescent material excited by infrared, visible, and ultraviolet rays, but there is a limitation in that special equipment is required to determine the forgery or tempering of the security fibers.

Domestic recycled yarn has no special characteristics compared to general yarn and imported recycled yarn, so that if a clothing manufacturer wants to use the domestic recycled yarn and purchases fabric from a fabric manufacturer, there is a problem in that it is difficult to verify the authenticity of a product if the product has been manufactured with the general yarn by the fabric manufacturer.

There has been a technology for security fibers for preventing the forgery of securities, high value-added products, and the like, but there is no technology for verifying the authenticity of yarn or fabric in the textile field.

### DISCLOSURE OF THE INVENTION

### TECHNICAL PROBLEM

The present invention is to solve the above-described problems of the prior art, and one object of the present invention is to provide fibers for verifying fabric authenticity, the fibers capable of verifying the authenticity of yarn or fabric.

Another object of the present invention is to provide a method for manufacturing the fibers for verifying fabric authenticity.

Yet another object of the present invention is to provide a system for verifying fabric authenticity by using the fibers for verifying fabric authenticity.

### TECHNICAL SOLUTION

One aspect of the present invention to achieve the above-described objects relates to fibers for verifying fabric authenticity including a fiber-forming polymer, wherein the fibers contain 50 ppm to 1000 ppm of a light-emitting body represented by any one of Formula 1 to Formula 4 below and having an average particle size equal to or greater than 0.5 µm and less than 5 µm and an emission wavelength of 800 nm to 2500 nm.

[Formula 1] Y_{X}V_{Y}O₃ : Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

It is preferable that the light-emitting body has a color L value of 50 or greater, and the fibers have a fineness of 1 denier to 4 denier.

The fiber-forming polymer is selected from the group consisting of polyester-based, acryl-based, polyamide-based, polyvinyl alcohol-based, acetate-based, polypropylene-based, polyolefin-based, polycarbonate-based, and cellulose-based fiber-forming polymers.

The polyester-based fiber-forming polymer is one or more selected from the group consisting of a polyethylene terephthalate homopolymer, a polyethylene terephthalate copolymer, polybutylene terephthalate, polycyclohexylene cyclohexanedicarboxylate, polycyclohexylene terephthalate, and polytrimethylene terephthalate.

Another aspect of the present invention relates to a method for manufacturing fibers for verifying fabric authenticity, the method including introducing a light-emitting body represented by any one of Formula 1 to Formula 4 below and having an average particle size equal to or greater than 0.5 µm and less than 5 µm and an emission wavelength of 800 nm to 2500 nm in a polymerization process to prepare an infrared light-emitting chip, and then using the chip for spinning to manufacture the fibers.

[Formula 1] Y_{X}V_{Y}O₃: Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

Yet another aspect of the present invention relates to a method for manufacturing fibers for verifying fabric authenticity, the method including compounding light-emitting body powder represented by any one of Formula 1 to Formula 4 below and having an average particle size equal to or greater than 0.5 µm and less than 5 µm and an emission wavelength of 800 nm to 2500 nm to prepare an infrared light-emitting chip, and using the chip for spinning to manufacture the fibers.

[Formula 1] Y_{X}V_{Y}O₃:Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

Still another aspect of the present invention relates to a method for manufacturing fibers for verifying fabric authenticity, the method including: preparing a light-emitting master batch by compounding a fiber-forming polymer chip, and light-emitting body powder represented by any one of Formula 1 to Formula 4 below and having an average particle size equal to or greater than 0.5 µm and less than 5 µm and an emission wavelength of 800 nm to 2500 nm to; and blending the light-emitting master batch with a general chip, followed by spinning.

[Formula 1] Y_{X}V_{Y}O₃:Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

Still yet another aspect of the present invention relates to a system for verifying fabric authenticity, wherein the system comprises fabric comprising the above-described fibers for verifying fabric authenticity, an infrared light-source unit configured to radiate infrared rays onto the fabric to be verified for authenticity, an infrared receiving unit configured to receive infrared rays reflected from the fabric to be verified for authenticity, and a control unit configured to control the infrared light-source unit and the infrared receiving unit, and determine the authenticity of the fabric to be verified for authenticity by using the infrared rays received by the infrared receiving unit.

### ADVANTAGEOUS EFFECTS

The fibers for verifying fabric authenticity of the present invention, which comprise an infrared light-emitting body, are included inside yarn or fabric to provide an effect of verifying authenticity or preventing forgery. For example, in the case of certain functional products, it is complicated and impossible to analyze the same after fabric manufacturing, but the fibers for verifying fabric authenticity of the present invention enable fast and accurate verification.

In addition, the fibers for verifying fabric authenticity of the present invention, which emit near-infrared rays, may provide remarkable advantages of providing an excellent spinning process and being capable of maintaining the physical properties of yarn as well.

According to the present invention, with a portable device, it is possible to easily and quickly verify authenticity of whether or not fabric has been manufactured using required yarn.

### BEST MODE FOR CARRYING OUT THE INVENTION

Hereinafter, the present invention will be described in more detail.

In addition, unless explicitly described to the contrary, the term "comprise" and variations such as "comprises" or "comprising" will be understood to imply the inclusion of stated elements or steps but not the exclusion of any other elements or steps.

One aspect of the present invention relates to fibers for verifying fabric authenticity including a fiber-forming polymer, wherein the fibers contain 50 ppm to 1000 ppm of a light-emitting body represented by any one of Formula 1 to Formula 4 below and having an average particle size equal to or greater than 0.5 µm and less than 5 µm and an emission wavelength of 800 nm to 2500 nm.

[Formula 1] Y_{X}V_{Y}O₃:Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

The fibers for verifying fabric authenticity of the present invention comprise an infrared light-emitting body, thereby exhibiting infrared fluorescence properties, and thus, may be used as security fibers, spun yarn, fibers for verifying fabric authenticity to prevent the forgery of yarn or fabric.

In the present invention, the light-emitting body has an emission wavelength of 800 nm to 2500 nm, and more preferably 800 nm to 1500 nm. If the emission wavelength of the light-emitting body is less than 800 nm, the emission wavelength is in a visible light range, so that the emission color is noticeable (fluorescence), and if greater than 2500 nm, the energy of the wavelength is weak, making the detection difficult.

The average particle size of the light-emitting body used in the present invention is equal to or greater than 0.5 µm and less than 5 µm, and more preferably 0.5 µm to 3 µm. If the average particle size of the light-emitting body is less than 0.5 µm, it may be difficult to verify the authenticity of yarn due to weak emission intensity, and if the average particle size of the light-emitting body is 5.0 µm or greater, the yield may decrease during spinning, and it may be difficult to secure physical properties of yarn.

The content of the light-emitting body included in the fibers for verifying fabric authenticity of the present invention is 50 ppm to 1000 ppm. If the content of the light-emitting body is less than 50 ppm, it is difficult to verify the authenticity of yarn due to weak emission intensity of infrared rays, and on the contrary, if the content of the light-emitting body is greater than 1000 ppm, there is no economic feasibility.

The light-emitting body of the present invention has a color L value of 50 or greater, and more preferably, has a color L value of 70 or greater. If the color L value is less than 50, the color of yarn becomes darker and the use of the yarn may thus be limited.

The fibers for verifying fabric authenticity of the present invention have a fineness of 1 denier to 4 denier. If the fineness of the fibers for verifying fabric authenticity is less than 1 denier, the workability of a spinning process becomes poorer, and on the contrary, if the fineness is greater than 4 denier, the fibers are not suitable for industrial use.

The fiber-forming polymer constituting the fibers for verifying fabric authenticity of the present invention may be one or more selected from the group consisting of polyester-based, acryl-based, polyamide-based, polyvinyl alcohol-based, acetate-based, polypropylene-based, polyolefin-based, polycarbonate-based, and cellulose-based fiber-forming polymers.

Specific examples of the polyester-based fiber-forming polymer may include a polyethylene terephthalate homopolymer, a polyethylene terephthalate copolymer, polybutylene terephthalate, polycyclohexylene cyclohexanedicarboxylate, polycyclohexylene terephthalate, and polytrimethylene terephthalate, but are not limited thereto.

Another aspect of the present invention relates to a method for manufacturing fibers for verifying fabric authenticity including a light-emitting body.

In the method of one aspect of the present invention, a light-emitting body represented by any one of Formula 1 to Formula 4 below and having an average particle size equal to or greater than 0.5 µm and less than 5 µm and an emission wavelength of 800 nm to 2500 nm is introduced in a polymerization process to prepare an infrared light-emitting chip, and then the chip is used for spinning to manufacture the fibers.

[Formula 1] Y_{X}V_{Y}O₃:Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

In the present invention, the light-emitting body may be added in a content of about 50 ppm to 1000 ppm, sufficiently mixed with the fiber-forming polymer, and then extruded using an extruder to prepare a master batch. In this case, operating conditions of the extruder may be adjusted according to the type of a synthetic resin. As described above, the synthetic resin discharged through a nozzle of the extruder may be processed in the form of a chip for a spinning process, which is a fiber manufacturing step. The size of each chip may be about 5 mm³ to about 15 mm³, and more specifically, may be about 8 mm³ to 12 mm³. The above-described manufacturing conditions may be slightly modified and used in the manufacturing process. In the method of the present invention, the spinning process for manufacturing fibers refers to a process of fiberizing the master batch in which the light-emitting body and the fiber-forming polymer are mixed.

In another embodiment, the fibers for verifying fabric authenticity may be manufactured by a method in which a fiber-forming polymer chip, and light-emitting body powder represented by any one of Formula 1 to Formula 4 below and having an average particle size equal to or greater than 0.5 µm and less than 5 µm and an emission wavelength of 800 nm to 2500 nm are compounded to prepare an infrared light-emitting chip, and the chip is used for spinning to manufacture the fibers.

[Formula 1] YₓV_{Y}O₃:Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

Yet another method for manufacturing fibers for verifying fabric authenticity comprises: preparing a light-emitting master batch by compounding a fiber-forming polymer chip, and light-emitting body powder represented by any one of Formula 1 to Formula 4 below and having an average particle size equal to or greater than 0.5 µm and less than 5 µm and an emission wavelength of 800 nm to 2500 nm; and blending the light-emitting master batch with a general chip, followed by spinning.

[Formula 1] YₓV_{y}O₃:Sb

(wherein, 0<X≤1 and 0<Y≤1)

[Formula 2] YbY_{X}V_{Y}Si₂O₇:M

(wherein, 0<X≤1 and 0.01<Y≤1, and M is Nd³⁺ or Er³⁺)

[Formula 3] Yb₂₋ₓY_{y}V_{Z}Si₂O₇:M

(wherein, 0<X≤1, 0<Y≤1, and 0<Z≤1, and M is Nd³⁺ or Er³⁺)

[Formula 4] YbₐYₓV_{y}Si_{Z}O₄:M

(wherein, 0<a≤1, 0<X≤1, 0<Y≤1, and 0<Z≤1, and M is Nd³⁺ or Er³⁺)

In addition, the method for manufacturing fibers for verifying fabric authenticity of the present invention may further comprise dyeing or coating the spun fibers. To this end, a typical infrared light-emitting body may be applied on the outer surface of the fibers by dyeing or coating methods.

Still yet another aspect of the present invention relates to a system for verifying fabric authenticity, wherein the system comprises fabric comprising the above-described fibers for verifying fabric authenticity, an infrared light-source unit configured to radiate infrared rays onto the fabric to be verified for authenticity, an infrared receiving unit configured to receive infrared rays reflected from the fabric to be verified for authenticity, and a control unit configured to control the infrared light-source unit and the infrared receiving unit, and determine the authenticity of the fabric to be verified for authenticity by using the infrared rays received by the infrared receiving unit.

The infrared light-source unit may radiate infrared rays onto one or more points of yarn or fabric, and the infrared receiving unit may receive near-infrared rays or infrared rays reflected from the yarn or fabric.

The system for verifying authenticity of the present invention irradiates the surface of yarn or fabric including a light-emitting body with light to detect a spectrum of a special wavelength emitted from a yarn or fabric sample, so that it is possible to accurately detect the presence or absence of the light-emitting body in the yarn or fabric sample.

The system for verifying authenticity of the present invention may comprise a display unit for displaying an amount of detection, an operating unit for receiving a user input, a communication unit connected to a control unit and being in charge of communication between the control unit and an external information processing device, a power unit connected to the control unit and supplying power, and the like.

As used in the present embodiment, the '~ unit' may comprise components such as software components, object-oriented software components, class components and task components, processes, functions, attributes, procedures, subroutines, segments of program codes, drivers, firmware, micro-code, circuits, data, databases, data structures, tables, arrays, and variables.

More detailed description of the present invention will be given with reference to examples below.

These examples are provided to describe the present invention in more detail, and the scope of the present invention is not limited to these examples.

### Examples

### Examples 1 to 3

A master batch was prepared by mixing 1 part by weight of YVO₃:Yb (IRumina 1050S of Nanocms Co.) having an average particle size of 1.0 µm based on 100 parts by weight of a polyethylene terephthalate resin by using a melt extruder. The master batch comprising a light-emitting body was mixed in a content of 1.0 part by weight (Example 1), 2.5 parts by weight (Example 2), and 5.0 parts by weight (Example 3) based on 100 parts by weight of a typical general polyethylene terephthalate resin. The resultant mixtures were melted at a temperature of 280 °C, and spun at a speed of 3200 m/min through a spinneret to prepare partially oriented yarn. The partially oriented yarn was false-twisted at a drawing ratio of 1.70, a drawing temperature of 220 °C, and a false-twisting rate of 500 m/min to obtain false twisted yarn of 75 denier/36 filaments.

### Comparative Example 1

False twisted yarn of 75 denier/36 filaments was obtained in the same manner as in Example 1, except that only the typical general polyethylene terephthalate resin was used without using a light-emitting body.

### Comparative Example 2

False twisted yarn of 75 denier/36 filaments was obtained in the same manner as in Example 1, except that 0.4 parts by weight of the master batch comprising a light-emitting body was mixed based on 100 parts by weight of the polyethylene terephthalate resin.

### Comparative Examples 3 to 4

False twisted yarn of 75 denier/36 filaments was obtained in the same manner as in Example 1, except that YVO₃:Yb having an average particle size of 0.1 µm (Comparative Example 3) and 5 µm (Comparative Example 4) were used as the light-emitting body.

### Experimental Example 1

Physical properties of the fibers for verifying fabric authenticity manufactured according to Examples 1 to 3 and Comparative Examples 1 to 4 were measured by the following method, and the results are shown in Table 1 below.
* Strength and elongation: The strength and elongation of recycled polyester long fibers were measured by using Instron 5565 of Instron Co., according to the KS K 0412 standards.
* Workability: The workability was measured as a ratio of yarn produced to introduced raw materials.
   Good: Yield of 90% or greater
   Poor: Yield of less than 90%
* Amount of infrared detection: The fibers for verifying fabric authenticity manufactured according to Examples 1 to 3 and Comparative Examples 1 to 4 above were irradiated with near-infrared rays having a wavelength of 980 nm, and the intensity of near-infrared rays at 1020 nm was calculated as an amount of detection. At this time, a relative value was recorded by correcting the measured value with respect to the value detected in Example 1.

**[Table 1]**

| | Average particle size of light-emitting body (µm) | Content of light-emitting body (ppm) | Fineness (denier) | Strength (g/d) | Elongation (%) | Workability | Amount of infrared rays detection |
|---|---|---|---|---|---|---|---|
| Example 1 | 1.0 | 100 | 75.4 | 4.56 | 27.3 | Good | 113 |
| Example 2 | 1.0 | 250 | 75.9 | 4.24 | 26.6 | Good | 267 |
| Example 3 | 1.0 | 500 | 75.9 | 4.37 | 26.7 | Good | 537 |
| Comparative Example 1 | - | - | 75.7 | 4.51 | 26.7 | Good | 0 |
| Comparative Example 2 | 1.0 | 40 | 75.3 | 4.55 | 26.4 | Good | 0 |
| Comparative Example 3 | 0.1 | 100 | 75.3 | 4.54 | 26.5 | Good | 0 |
| Comparative Example 4 | 5.0 | 100 | 75.1 | 4.17 | 23.3 | Poor | 340 |

Although the present invention has been described above with reference to specific embodiments, these are merely illustrative, and it will be understood by those skilled in the art that various modifications and changes may be made therefrom. Accordingly, the true technical protection scope of the inventive concept should be determined by the technical idea of the appended claims.

## Claims

1. Fibers for verifying fabric authenticity comprising a fiber-forming polymer, wherein the fibers contain 50 ppm to 1000 ppm of a light-emitting body represented by any one of Formula 1 to Formula 4 below and having an average particle size equal to or greater than 0.5 µm and less than 5 µm and an emission wavelength of 800 nm to 2500 nm:
[Formula 1] Y_{X}V_{Y}O₃:Sb
wherein 0<X≤1 and 0<Y≤1;
[Formula 2] YbY_{X}V_{Y}Si₂O₇:M
wherein 0<X≤1 and 0.01<Y≤1, and M is Nd³⁺ or Er³⁺;
[Formula 3] Yb₂₋ₓY_{y}V_{Z}Si₂O₇:M
wherein 0<X≤1, 0<Y≤1, and 0<Z≤1, and M is Nd³⁺ or Er³⁺;
[Formula 4] YbₐYₓV_{y}Si_{Z}O₄:M
wherein 0<a≤1, 0<X≤1, 0<Y≤1, and 0<Z≤1, and M is Nd³⁺ or Er³⁺.

2. The fibers of claim 1, wherein the light-emitting body has a color L value of 50 or greater.

3. The fibers of claim 1, wherein the fibers have a fineness of 1 denier to 4 denier.

4. The fibers of claim 1, wherein the fiber-forming polymer is selected from the group consisting of polyester-based, acryl-based, polyamide-based, polyvinyl alcohol-based, acetate-based, polypropylene-based, polyolefin-based, polycarbonate-based, and cellulose-based fiber-forming polymers.

5. The fibers of claim 1, wherein the polyester-based fiber-forming polymer is one or more selected from the group consisting of a polyethylene terephthalate homopolymer, a polyethylene terephthalate copolymer, polybutylene terephthalate, polycyclohexylene cyclohexanedicarboxylate, polycyclohexylene terephthalate, and polytrimethylene terephthalate.

6. A method for manufacturing fibers for verifying fabric authenticity, the method comprising introducing a light-emitting body represented by any one of Formula 1 to Formula 4 below and having an average particle size equal to or greater than 0.5 µm and less than 5 µm and an emission wavelength of 800 nm to 2500 nm in a polymerization process to prepare an infrared light-emitting chip, and then using the chip for spinning to manufacture the fibers:
[Formula 1] Y_{X}V_{Y}O₃:Sb
wherein 0<X≤1 and 0<Y≤1;
[Formula 2] YbY_{X}V_{Y}Si₂O₇:M
wherein 0<X≤1 and 0.01<Y≤1, and M is Nd³⁺ or Er³⁺;
[Formula 3] Yb₂₋ₓY_{y}V_{Z}Si₂O₇:M
wherein 0<X≤1, 0<Y≤1, and 0<Z≤1, and M is Nd³⁺ or Er³⁺;
[Formula 4] YbₐYₓV_{y}Si_{Z}O₄:M
wherein 0<a≤1, 0<X≤1, 0<Y≤1, and 0<Z≤1, and M is Nd³⁺ or Er³⁺.

7. A method for manufacturing fibers for verifying fabric authenticity, the method comprising compounding a fiber-forming polymer chip, and light-emitting body powder represented by any one of Formula 1 to Formula 4 below and having an average particle size equal to or greater than 0.5 µm and less than 5 µm and an emission wavelength of 800 nm to 2500 nm to prepare an infrared light-emitting chip, and using the chip for spinning to manufacture the fibers:
[Formula 1] Y_{X}V_{Y}O₃:Sb
wherein 0<X≤1 and 0<Y≤1;
[Formula 2] YbY_{X}V_{Y}Si₂O₇:M
wherein 0<X≤1 and 0.01<Y≤1, and M is Nd³⁺ or Er³⁺;
[Formula 3] Yb₂₋ₓY_{y}V_{Z}Si₂O₇:M
wherein 0<X≤1, 0<Y≤1, and 0<Z≤1, and M is Nd³⁺ or Er³⁺;
[Formula 4] YbₐYₓV_{y}Si_{Z}O₄:M
wherein 0<a≤1, 0<X≤1, 0<Y≤1, and 0<Z≤1, and M is Nd³⁺ or Er³⁺.

8. A method for manufacturing fibers for verifying fabric authenticity, the method comprising: preparing a light-emitting master batch by compounding a fiber-forming polymer chip, and light-emitting body powder represented by any one of Formula 1 to Formula 4 below and having an average particle size equal to or greater than 0.5 µm and less than 5 µm and an emission wavelength of 800 nm to 2500 nm; and blending the light-emitting master batch with a general chip, followed by spinning:
[Formula 1] Y_{X}V_{Y}O₃:Sb
wherein 0<X≤1 and 0<Y≤1;
[Formula 2] YbY_{X}V_{Y}Si₂O₇:M
wherein 0<X≤1 and 0.01<Y≤1, and M is Nd³⁺ or Er³⁺;
[Formula 3] Yb₂₋ₓY_{y}V_{Z}Si₂O₇:M
wherein 0<X≤1, 0<Y≤1, and 0<Z≤1, and M is Nd³⁺ or Er³⁺;
[Formula 4] YbₐYₓV_{y}Si_{Z}O₄:M
wherein 0<a≤1, 0<X≤1, 0<Y≤1, and 0<Z≤1, and M is Nd³⁺ or Er³⁺.

9. A system for verifying fabric authenticity by using fibers for verifying fabric authenticity, the system comprising:
fabric comprising the fibers for verifying fabric authenticity of any one of claims 1 to 5;
an infrared light-source unit configured to radiate infrared rays onto the fabric to be verified for authenticity;
an infrared receiving unit configured to receive infrared rays reflected from the fabric to be verified for authenticity; and
a control unit configured to control the infrared light-source unit and the infrared receiving unit, and determine the authenticity of the fabric to be verified for authenticity by using the infrared rays received by the infrared receiving unit.
